# EUROPEAN PATENT SPECIFICATION

(11) **EP 3 127 332 B1**
(45) Date of publication and mention of the grant of the patent: **27.11.2019**
(21) Application number: 15770672.2
(22) Date of filing: 03.04.2015
(51) Int. Cl.: H04N 21/214

(54) **MOBILE DEVICE IN-FLIGHT ENTERTAINMENT CONNECTION**
VERBINDUNG EINER MOBILEN VORRICHTUNG FÜR UNTERHALTUNG WÄHREND DES FLUGES
CONNEXION DE DIVERTISSEMENT EN VOL DE DISPOSITIF MOBILE

(30) Priority: 04.04.2014 US 201461975657 P
(43) Date of publication of application: 08.02.2017
(73) Proprietor: Systems and Software Enterprises, LLC, Brea, California 92821 (US)
(72) Inventor: HEALY, Christopher P., Orange, California 92807 (US); EDILLION, Edwin, Diamond Bar, California 91765 (US)
(74) Representative: Cork, Robert
(86) International application number: PCT/US2015/024366
(87) International publication number: WO 2015/154043

(56) References cited:
- US-A1- 2011 314 490

## Description

This application claims the benefit of priority to U.S. Patent Application No. U.S. 14/678810 filed on April 3, 2015, which claims the benefit of priority to U.S. Provisional Application No. 61/975,657 filed on April 4, 2014. This and all other extrinsic materials discussed in this application are incorporated by reference in their entirety. Where a definition or use of a term in an incorporated reference is inconsistent or contrary to the definition of that term provided in this application, the definition of that term provided in this application applies and the definition of that term in the reference does not apply.

### Field of the Invention

The field of the invention is vehicular entertainment systems.

### Background

The background description includes information that may be useful in understanding the present invention. It is not an admission that any of the information provided in this application is prior art or relevant to the presently claimed invention, or that any publication specifically or implicitly referenced is prior art.

In recent years, the use of smart devices such as smart phones and tablet computers has exploded. Mobile website traffic grows year after year and mobile page views make up a significant portion of total page views for many popular websites. People have grown to expect interactivity and high quality entertainment from their personal computing devices. As smart devices begin to occupy a more and more prominent space in the everyday lives of many people, those people will begin to expect their smart devices to interact more and more with different aspects of their lives.

In-vehicle entertainment has always been an important aspect of traveling, and as time goes on it is becoming more important to provide entertainment that meets consumer expectations. In the past, it was sufficient to provide a few magazines or a book, but as technologies have developed so too have consumer expectations. And although technology has progressed rapidly, many in-vehicle entertainment systems have failed to provide solutions that meet consumer expectations for interactivity.

Some efforts have been made to attempt to solve this problem. U.S. Patent App. No. 2012/0174165 to Mondragon discloses an in-flight entertainment system that uses smart devices running Android system software with special applications. The smart devices can be configured to sync with particular entertainment screens, based on each device and screen having a particular MAC address. Communication between the smart devices and the screens can occur over wireless networks, allowing flight information to be passed to the smart devices.

Mondragon, however, fails to appreciate that providing smart devices running Android as a part of the system will not only increase cost, it assures obsolescence in an unreasonably short amount of time considering the cost of the system. Requiring special system software and applications along with custom hardware to use the system further hinder its usefulness.

U.S. Patent No. 7,343,157 to Mitchell discloses an in-flight entertainment system that operates by communicating with passenger cell phones. In this system, the plane has communication infrastructure allowing cell phones on board the plane to communicate with the in-flight entertainment system. Cell phones must call in to the system to request entertainment content, which the system stores within the aircraft and then distributes the content to the cell phone that called in with the request.

Mitchell is riddled with disadvantages. First, the system requires users to call in to the system to use it. This solution limits possible devices to only cellular capable devices, leaving out many tablets and other smart devices lacking cellular antennas or data plans. In addition, this solution fails to disclose communication between passenger smart devices and displays within the vehicle.

European Patent No. 1504604 B1 to Brady discloses the use of some common network protocols in in-flight entertainment systems. In particular, it discloses the use of computer networks to control in-flight entertainment systems in airplanes. It discusses the use of HTTP and other common network protocols. But Brady falls short in that it can use only limited network protocols (*i.e.,* single duplex) and it additionally fails to disclose interfacing of passenger-owned smart devices with the system.

All publications identified in this application are incorporated by reference to the same extent as if each individual publication or patent application were specifically and individually indicated to be incorporated by reference. Where a definition or use of a term in an incorporated reference is inconsistent or contrary to the definition of that term provided in this application, the definition of that term provided in this application applies and the definition of that term in the reference does not apply. US 2011/0314490 A1 discloses an aircraft communications system including an in-flight entertainment (IFE) controller for selectively displaying video from an IFE entertainment source on IFE passenger seat displays, and for communicating with a personal electronic device (PED) via a wireless transceiver.

Thus, there is still a need for vehicular entertainment system that makes use of passenger-owned mobile devices in new ways.

### Summary of the Invention

As used in the description in this application and throughout the claims that follow, the meaning of "a," "an," and "the" includes plural reference unless the context clearly dictates otherwise. Also, as used in the description in this application, the meaning of "in" includes "in" and "on" unless the context clearly dictates otherwise.

The inventive subject matter is drawn generally to a vehicular entertainment system, where the entertainment system interacts with a client mobile device over a wireless network. The system can be implemented on a variety of vehicles including aircraft and buses. A host computing device and a display screen must both be disposed within the vehicle implementing a preferred embodiment of the entertainment system. The host computing device is preferably coupled to the display device so that it outputs various content to the display device (e.g., television shows, movies, music, etc.).

According to the present invention there is provided an in-flight entertainment system according to claim 1. Preferred embodiments also include a wireless network that enables a client mobile device to communicate with the host computing device. The wireless network preferably creates a full duplex communication channel between the client mobile device and the host computing device. In some embodiments, the full duplex communication channel operates over a TCP connection. In other embodiments, the full duplex communication channel operates over a single TCP connection (*e.g*. WebSocket protocol). The wireless network can also enable UDP connections.

In a preferred embodiment the client mobile device presents a context-sensitive interface that is configured, and can change, based on the content presented on the display screen disposed in the vehicle. This context-based interaction is facilitated by the wireless network, which allows for data to flow between the host computing device and the client mobile device. In preferred embodiments, the context-based interface enables allows a user to interact with content presented on the display screen in the vehicle by using their mobile device (*e.g*., tablet, smart phone, etc.).

Preferably, different entities own the host computing device than the client mobile devices. For example, a passenger on an aircraft might own the client mobile device while the airline owns the host computing device.

In preferred embodiments, the content presented on the display screen disposed in the vehicle can include: a game, a video, a photograph, a menu, a static image, a song, a musical composition, or a list of selectable items. Based on what the display screen shows, the client mobile device can present an interactive visual interface including: a game controller, a video controller, a photograph controller, a menu, a static image, an audio controller, a music controller, and a list of selectable items. The interactive visual interface enables a user to manipulate the content on the display screen by manipulating the interactive visual interface. Preferably, the interactive visual interface dynamically changes based on changes to the content displayed on the display screen.

In preferred embodiments, the client mobile device communicates with the host computing device via a pre-installed web browser (*e.g*., Chrome on Android devices, Internet Explorer on Windows/Windows Phone devices, Safari on Apple devices, etc.). In doing so, the client mobile device is not required to download or install any additional software since web browsers come standard on virtually all smart devices (*e.g*., smart phones, tablets, handheld gaming systems, etc.). Since all that is required is a web browser, the system operates independently of the operating system running on the client mobile device-any system will work as well as any other, provided there is a web browser. Interactivity between a device (*i.e.,* a client mobile device) and a server (*i.e.,* a host computing device) via a web browser can be accomplished using a TCP connection as described above (*e.g*., WebSocket, or a similar protocol implementing a full duplex communication channel over a single TCP connection). In these embodiments, the web browser is responsible for rendering the interactive visual interface on a client mobile device's screen.

To facilitate interaction between the client mobile device and the host computing devices, in preferred embodiments the client mobile device receives a control signal from the host computing device via the wireless network, and the content displayed on the client mobile device is modified in response to the control signal. The same content can be presented on both the display device and the client mobile device, or the client mobile device can display a modified version of the content presented on the display screen. In other embodiments, the content presented by the client mobile device is complementary to the content presented by the display screen.

As a corollary to the embodiment described in the preceding paragraph, the client mobile device could just as easily send a control signal to the host computing device via the wireless network to modify content displayed on the display screen disposed in the vehicle.

It should be apparent to those skilled in the art that many more modifications besides those already described are possible without departing from the inventive concepts in this application. The inventive subject matter, therefore, is not to be restricted except in the spirit of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C .... and N, the text should be interpreted as requiring only one element from the group, not A plus N, or B plus N, etc.

### Brief Description of Drawings

**Figure 1** shows an abstraction of a preferred embodiment of a vehicle entertainment system.
**Figure 2** shows an abstraction of another preferred embodiment of a vehicular entertainment system additionally implementing a web browser.

### Detailed Description

This application describes vehicular entertainment systems, apparatuses, and methods that incorporate user-owned smart devices into the provision and manipulation of content. The inventors contemplate embodiments of the inventive subject matter will be used primarily for providing in-flight entertainment to airline passengers, but the same system can easily be implemented in any manner of vehicles that commonly carry passengers. It could be implemented in buses, cars, and even boats, for example.

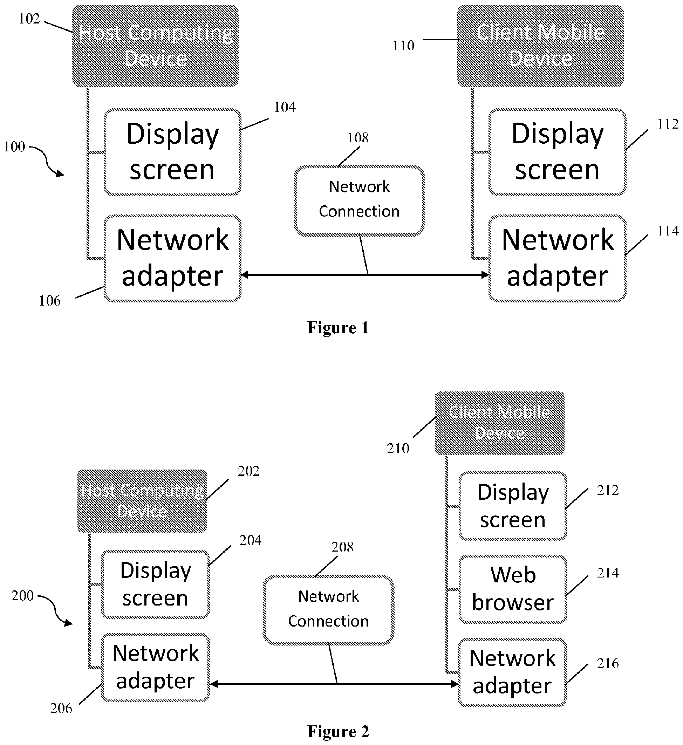

To abstract, the entertainment system for a vehicle is shown in **Figures 1** and **2****.** The entertainment system for a vehicle 100 shown **Figure 1** depicts a host computing device, a display screen 104, and a network adapter 106. Also shown is a client mobile device 110 having its own display screen 112 and a network adapter 114. For the sake of simplicity, when this application refers to the client mobile device 110 as presenting content, it is implied that the client mobile device's display screen 112 is the component that presents that content. The client mobile device 110, like the host computing device 102, also includes a network adapter 114. The host computing device's network adapter 106 and the client mobile device's network adapter 114 facilitate a wireless connection between the two components.

The host computing device's network adapter 106 facilitates the establishment of a network connection 108 (*e.g.,* wired or wireless) with the client mobile device's network adapter 114.

**Figure 2** shows a virtually identical system as depicted in **Figure 1****,** except **Figure 2** additionally shows a web browser. The host computing device 202, display screen 204, network adapter 206, network connection 208, client mobile device 210, display screen 212, and network adapter 216 are the same as their corresponding components shown in **Figure 1****.**

The system requires the host computing device to be present on the vehicle (not pictured). The host computing device can act as a centralized server for the entire vehicle, distributing content to different display devices that are disposed within the vehicle. Or there can be multiple host computing devices, each one corresponding to a particular display device disposed within the vehicle. Alternatively, multiple host computing devices can be present on a given vehicle where each individual host computing device is coupled with two, three, four, or more display devices.

A host computing device can be a standard PC, or it could even be a server type computer. In different embodiments, a host computing device can use any manner of operating systems. For example, the host computing device could implement a customized Linux distribution designed specifically for the vehicular entertainment system, or it could run a more standard operating system like Windows or Mac OS. It could also implement a standardized Linux distribution, depending on the needs of the system. In other embodiments, host computing devices could operate on a completely custom operating system.

Ultimately, the host computing device must be capable of networking with other devices, either wired, wirelessly, or both. In some embodiments, the host computing device must be able to present content to one or more display devices (*e.g*., seatback display screen(s) on an aircraft). Presentation of content from a host computing device to one or more screens can be accomplished by either a wired (*e.g*., HDMI, DVI, USB, USB-C, or the like) or wireless connection (*e.g*., an 802.11-based protocol, Bluetooth, or the like). Implementing a wireless connection between a display and the host computing device can allow the host computing device to be located in a separate location from the display device without the need for extra wiring (*e.g*., the host computing device could be located at the front of the aircraft and be capable of distributing content throughout the aircraft).

Besides a host computing device, the system requires a separate client mobile device that is brought on board by a user. Many types of user devices are contemplated. Specific examples include smart phones, smart devices, tablets, and handheld gaming devices, but any wireless-capable device that is able to render content on its screen is contemplated as useable with the system. In preferred embodiments, client mobile devices are electronic devices generally capable of connecting to other devices, computers, servers, or networks via different protocols such as Bluetooth, NFC, WiFi, 3G, etc. The inventors contemplate that the client mobile device of the inventive subject matter can be any one of a smart phone, a tablet, a phablet, a laptop, or any device known in the art that allows for wired or wireless communication with another device. In preferred embodiments, the client mobile device is the property of a passenger on the vehicle, and is brought onto the vehicle by that passenger.

In some embodiments, the client mobile device includes a web browser (*e.g*., Safari, Chrome, Internet Explorer, Opera, or any other browser capable of establishing HTTP connections). Ideally, a user can interact with the system using a web browser on their mobile device without needing to download a separate application or piece of software, or otherwise specifically configuring their device for use with the system. That way, for example, if a person boards an aircraft, they already know their mobile device will be compatible with the in-flight entertainment system, regardless of what apps are install, the operating system their device uses, or any other factors that would normally affect compatibility. This eliminates situations where a user ends up in the air, mid-flight, without the requisite software to consume or interact with the provided in-flight entertainment system.

As an example: if a passenger boards and airplane, and they wish to consume some form of in-flight entertainment, that passenger would first connect to the wireless network broadcast throughout the cabin. Once connected, that passenger would open the web browser that came pre-installed on their device. That browser would automatically redirect the passenger to connect to the host computing device and present a menu of selectable items, such as: Movies, Music, and Games. Thus, virtually no setup nor any specialized application or system software is required.

The system is also scalable. For example, when there are multiple display screens disposed in a vehicle, multiple client mobile devices may be used with the display screens. So a first smart device can communicate with a first display device, while a second smart device can simultaneously communicate with a second display device. In this situation, the first and second client mobile devices and display devices are distinct devices. Communication between the client mobile devices and the display devices of these embodiments can be carried out via a network connection (*e.g.*, a wired connection or a wireless connection).

As mentioned above, a client mobile device communicates with a host computing device by a network connection. The preferred network connection between the host computing device and the client mobile device is a wireless network. But the inventors also contemplate any manner of currently known wireless network protocols including: Bluetooth, WiFi (*e.g.,* 802.11a, b, g, n, etc.), wireless PAN, wireless LAN, wireless mesh network, wireless MAN, wireless WAN, cellular network, and global area network.

Anywhere a wireless network connection is mentioned within this application, that wireless connection could just as easily be replaced with a wired network connection. To that end, the client mobile device could be connected to the host computing device via a wired network connection instead of a wireless network connection. Wired connections contemplated include proprietary connection via, for example, Apple's Thunderbolt or Lightning connectors (or any successors to those standards), or standard connectors such as USB, Mini USB, USB-C, Micro USB, CAT5, and/or other commonly used wired connections. Physically wired connection can operate using the same protocols as described above with respect to wireless connections (*i.ₑ.,* Web Socket).

Although establishing a wireless connection is important for embodiments of the inventive subject matter, it is also important that the network provide sufficient communication between the host computing device and the client mobile device. Preferably, the wireless connection enables full duplex communication. In some embodiments, full duplex communication can occur over a single TCP connection (or in other instances, multiple TCP connections). An example of a currently suitable protocol includes WebSocket. Unlike HTTP, WebSocket allows for full-duplex communication over a single TCP connection. The IEFT standardized the WebSocket protocol in 2011 as RFC 6455. Full-duplex communication refers to the ability of data to be sent and received simultaneously (*e.g.,* a telephone, which allows multiple users to speak and hear one another simultaneously).

But the inventors contemplate that as wireless technologies advance, wireless protocols will also change. Ultimately, embodiments of the inventive subject matter require simultaneous two way communication between the client mobile device and the host computing device.

Once the client mobile device is coupled with the host computing device by a network connection, the client mobile device can interact with the content presented on the display screen. The host computing device is able to store, or access remotely, content such as: movies, music videos, video games, jukeboxes, trivia, and the like. All manner of entertainment that can be presented by a video screen is contemplated. Depending on the content currently presented on the display screen, the client mobile device presents to a user-on its own display screen-a corresponding interactive interface.

The inventors additionally contemplate coordination between the client mobile device and the display screen to take a number of different forms. The content presented by the client mobile device user can be: the same content as presented on the display device; a modified version of the content presented on the display device; or complementary content to the content presented on the display device. The "same content" can refer to content that is identical to the content presented on the display device making the client mobile device act as a duplication of the display device. A "modified version" of the content presented on the display device can be based on the content presented on that display device, but include new content as well (*e.g.,* the content presented on the display device could be a movie, and the client mobile device could then display the movie with playback controls overlaid thereon). "Complementary content" refers to content presented to the user via the client mobile device display that, while not the same as the content presented on the display device, is related to the content in some useful or interesting way (*e.g.,* the display device could present a video game and the client mobile device display could present virtual buttons or an interactive map).

For example, a person can enter an airplane, sit down, and connect to a wireless network with their mobile device. Once connected, the user can then access (by, for example, a web browser) a list of options for content to consume. They could be presented with a list of options such as: Movies, Music Videos, and Games. Upon selection of the category "Movies," the screen on the seatback in front of that person could then show different movie covers and the person could select a movie on their mobile device screen. If that person selects a movie, they could choose to watch a trailer, at which time their mobile device would change to render buttons corresponding to "Play/Pause," "Rewind," "Fast Forward," and "Back."

Besides merely providing controls, the client mobile device could also present extra features associated with the content shown on the display screen. If a person chooses to watch a movie, the client mobile device could then show certain extra features related to the movie, such as subtitles, outtakes, or commentary. In another embodiment, a user could select the category "Games." Upon selection of the category, the user could then select a particular game, which would cause their mobile device's screen to present a set of controls to control a character that is presented on the seatback display in front of them.

Thus, the client mobile device presents a context sensitive interactive interface upon accessing the host computing device (*e.g*., via a web browser on the client mobile device). In preferred embodiments, accessing the host computing device via a web browser would enable the client mobile device to access content stored on the host computing device (or stored remotely, but accessible via the host computing device). However, in other embodiments, the host computing device merely has access to a remote server that stores the relevant content, and the host computing device coordinates distribution upon request for access.

As used in this application, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

## Claims

1. An in-flight entertainment system, where the entertainment system interacts with a client mobile device over a wireless network, comprising:
a host computing device (202) disposed within an aircraft and configured to store content;
a display screen (204) disposed within the aircraft and coupled with the host computing device (202), wherein at least some of the content can be presented on the display screen (204);
the wireless network comprising a full duplex communication channel with a WebSocket protocol that allows for coupling of, and communication between, the client mobile device (210) with the host computing device (202),
wherein the client mobile device (210) comprises a pre-installed web browser (214), and wherein the client mobile device (210) is configured to connect and communicate with the host computing device (204) via the pre-installed web browser (214) on the client mobile device (210);
wherein the host computing device (202) transmits data, via the wireless network, to cause the pre-installed web browser to automatically redirect the pre-installed web browser (214) to a predefined webpage and render an interactive visual interface within the pre-installed web browser (214), wherein the interactive visual interface presented in the pre-installed web browser (214) is context-sensitive and dynamically generated to vary with the content displayed on the display screen (204) and manipulate the content displayed on the display screen (204) using the pre-installed web browser (214),
wherein the interactive visual interface is configured based on the content displayed on the display screen (204), and comprises at least one of a game controller, a video controller, a photograph controller, a menu, a static image, an audio controller, a music controller, and a list of selectable items; and
wherein the client mobile device (210) is portable and specific to a passenger on the aircraft and wherein the host computing device (202) is specific to the aircraft.

2. The in-flight entertainment system of claim 1, wherein the wireless network comprises a TCP connection.

3. The in-flight entertainment system of claim 1 or 2, wherein the interactive visual interface dynamically changes based on changes in the content displayed on the display screen.

4. The in-flight entertainment system of any one of the preceding claims, wherein the full duplex communication channel operates over a single TCP connection.

5. The in-flight entertainment system of any one of the preceding claims, wherein the client mobile device is configured to receive a control signal from the host computing device via the wireless network, and the content displayed on the client mobile device is modified in response to the control signal.

6. The in-flight entertainment system of any one of the preceding claims, wherein the same content is presented on both the client mobile device and the display screen.

7. The in-flight entertainment system of any one of claims 1 -5wherein the content presented by the client mobile device is complementary to the content presented by the display screen,

## Patentansprüche

1. Bordunterhaltungssystem, wobei das Unterhaltungssystem mit einer Client-Mobileinheit über ein drahtloses Netzwerk interagiert, aufweisend:
eine Host-Datenverarbeitungseinheit (202), die in einem Flugzeug angeordnet und konfiguriert ist, um Content zu speichern;
einen Anzeigebildschirm (204), der in dem Flugzeug angeordnet und mit der Host-Datenverarbeitungseinheit (202) verbunden ist, wobei mindestens einiger Content auf dem Anzeigebildschirm (204) dargestellt werden kann;
wobei das drahtlose Netzwerk einen Vollduplexkommunikationskanal mit einem WebSocket-Protokoll aufweist, das eine Verbindung der Client-Mobileinheit (210) mit der Host-Datenübertragungseinheit (202) und eine Datenübertragung zwischen diesen ermöglicht, wobei die Client-Mobileinheit (210) einen vorinstallierten Web-Browser (214) aufweist, und wobei die Client-Mobileinheit (210) konfiguriert ist, um sich mit der Host-Datenübertragungseinheit (204) über den vorinstallierten Web-Browser (214) auf der Client-Mobileinheit (210) zu verbinden und mit ihr Daten auszutauschen;
wobei die Host-Datenübertragungseinheit (202) über das drahtlose Netzwerk Daten überträgt, um den vorinstallierten Web-Browser zu veranlassen, den vorinstallierten Web-Browser (214) automatisch auf eine vordefinierte Webseite weiterzuleiten und eine interaktive visuelle Schnittstelle in dem vorinstallierten Web-Browser (214) zu rendern, wobei die interaktive visuelle Schnittstelle, die in dem vorinstallierten Web-Browser (214) dargestellt wird, kontextsensitiv ist und dynamisch generiert wird, um sich mit dem Content zu verändern, der auf dem Anzeigebildschirm (204) angezeigt wird, und den auf dem Anzeigebildschirm (204) angezeigten Content unter Verwendung des vorinstallierten Web-Browsers (214) zu bearbeiten, wobei die interaktive visuelle Schnittstelle auf Grundlage des auf dem Anzeigebildschirm (204) angezeigten Contents konfiguriert wird und mindestens einen Game-Controller, einen Video-Controller, einen Fotografie-Controller, ein Menü, ein statisches Bild, einen Audio-Controller, einen Musik-Controller oder eine Liste von auswählbaren Elementen aufweist; und
wobei die Client-Mobileinheit (210) tragbar ist und für einen Passagier auf dem Flugzeug spezifisch ist, und wobei die Host-Datenübertragungseinheit (202) für das Flugzeug spezifisch ist.

2. Bordunterhaltungssystem nach Anspruch 1, wobei das drahtlose Netzwerk eine TCP-Verbindung aufweist.

3. Bordunterhaltungssystem nach Anspruch 1 oder 2, wobei die interaktive visuelle Schnittstelle sich auf Grundlage von Änderungen in dem auf dem Anzeigebildschirm angezeigten Content ändert.

4. Bordunterhaltungssystem nach einem der vorhergehenden Ansprüche, wobei der Vollduplexkommunikationskanal über eine einzelne TCP-Verbindung arbeitet.

5. Bordunterhaltungssystem nach einem der vorhergehenden Ansprüche, wobei die Client-Mobileinheit konfiguriert ist, um ein Steuersignal von der Host-Datenverarbeitungseinheit über das drahtlose Netzwerk zu empfangen, und der auf der Client-Mobileinheit angezeigte Content in Reaktion auf das Steuersignal modifiziert wird.

6. Bordunterhaltungssystem nach einem der vorhergehenden Ansprüche, wobei derselbe Content sowohl auf der Client-Mobileinheit als auch dem Anzeigebildschirm dargestellt wird.

7. Bordunterhaltungssystem nach einem der Ansprüche 1 bis 5, wobei der durch die Client-Mobileinheit dargestellte Content komplementär zu dem durch den Anzeigebildschirm dargestellten Content ist.

## Revendications

1. Système de divertissement en vol, le système de divertissement interagissant avec un dispositif mobile client sur un réseau sans fil, comprenant :
un dispositif informatique hôte (202) agencé dans un avion, et configuré pour stocker un contenu ;
un écran d'affichage (204) disposé dans l'avion, et couplé au dispositif informatique hôte (202), au moins une partie du contenu pouvant être présenté sur l'écran d'affichage (204) ;
le réseau sans fil comprenant un canal de communication en duplex intégral avec un protocole WebSocket permettant le couplage du dispositif mobile client (210) au dispositif informatique hôte (202), et les communications entre eux, le dispositif mobile client (210) comprenant un navigateur Web préinstallé (214), et le dispositif mobile client (210) étant configuré pour la connexion et les communications à l'écran d'affichage (204) par le biais du navigateur Web préinstallé (214) sur le dispositif mobile client (210) ;
le dispositif informatique hôte (202) transmettant des données, par le biais du réseau sans fil, pour donner lieu au réacheminement automatique, par le navigateur Web préinstallé, du navigateur Web préinstallé (214) à une page Web prédéfinie et fournir une interface visuelle interactive au sein du navigateur Web préinstallé (214), l'interface visuelle interactive présentée dans le navigateur Web préinstallé (214) étant contextuelle, et générée dynamiquement pour varier en fonction du contexte affiché sur l'écran d'affichage (204), et manipuler le contenu affiché sur l'écran d'affichage (204) en utilisant le navigateur Web préinstallé (214), l'interface visuelle interactive étant configurée en fonction du contenu affiché sur l'écran d'affichage (204), et comprenant au moins un d'une commande de jeu, d'une commande vidéo, d'une commande de photographie, d'un menu, d'une image statique, d'une commande audio, d'une commande musicale, et d'une liste d'éléments sélectionnables ; et
le dispositif mobile client (210) étant portable et spécifique à un passager dans l'avion et le dispositif informatique hôte (202) étant spécifique à l'avion.

2. Système de divertissement en vol selon la revendication 1, le réseau sans fil comprenant une connexion TCP.

3. Système de divertissement en vol selon la revendication 1 ou 2, l'interface visuelle interactive changeant dynamiquement en fonction des changements du contenu affiché sur l'écran d'affichage.

4. Système de divertissement en vol selon une quelconque des revendications précédentes, le canal de communication en duplex intégral fonctionnant sur une connexion TCP unique.

5. Système de divertissement en vol selon une quelconque des revendications précédentes, le dispositif mobile client étant configuré pour recevoir un signal de contrôle du dispositif informatique hôte via le réseau sans fil, et le contenu affiché sur le dispositif mobile client étant modifié en réponse au signal de contrôle.

6. Système de divertissement en vol selon une quelconque des revendications précédentes, le même contenu étant présenté à la fois sur le dispositif mobile client et l'écran d'affichage.

7. Système de divertissement en vol selon une quelconque des revendications 1 à 5, le contenu présenté par le client étant complémentaire au contenu présenté par l'écran d'affichage.
